# EUROPÄISCHE PATENTSCHRIFT

(11) **EP 0 658 311 B1**
(45) Veröffentlichungstag und Bekanntmachung des Hinweises auf die Patenterteilung: **17.07.1996**
(21) Anmeldenummer: 93120351.7
(22) Anmeldetag: 17.12.1993
(51) Int. Cl.: A22C 17/12

(54) **Vorrichtung zum Entfernen der Haut von den Körpern geschlachteten Geflügels**
Device for removing the skin from the body of slaughtered poultry
Dispositif pour enlever la peau du corps de volailles abattues

(43) Veröffentlichungstag der Anmeldung: 21.06.1995
(73) Patentinhaber: NORDISCHER MASCHINENBAU RUD. BAADER GMBH + CO KG, D-23560 Lübeck (DE)
(72) Erfinder: Jordan, Holger, New Bedford, Massachusetts 02745 (US); Richartz, Sigurd, D-23556 Lübeck (DE)

(56) Entgegenhaltungen:
- FR-A- 823 047
- FR-A- 2 057 654
- NL-A- 8 901 368
- US-A- 3 324 915
- US-A- 3 685 561
- US-A- 4 203 179

## Beschreibung

Die Erfindung betrifft eine Vorrichtung zum Entfernen der Haut von den Körpern geschlachteten Geflügels bzw. von Teilen solcher Körper, mit einer umlaufend angetriebenen Hautmitnehmerwalze mit griffiger Mantelfläche, einem ebenen Messer, welches mit seiner Schneidkante der Mantelfläche unter Belassen eines Spaltes gegenüberliegt, einem in Drehrichtung der Hautmitnehmerwalze hinter der Schneidkante angeordneten Andrückschuh mit einer einen Spalt gegenüber der Mantelfläche bildenden Andrückfläche, sowie mit einem Hilfsförderer welcher mindestens einen umlaufend angetriebenen Rotationskörper umfaßt, dessen Drehachse im wesentlichen parallel zu der Achse der Hautmitnehmerwalze verläuft und der an seinem Umfang einen schraubenförmig gewundenen Steg aufweist.

Ein geändertes Geschmacks- und Gesundheitsbewußtsein haben dazu geführt, daß mehr und mehr Geflügel, insbesondere Hähnchen konsumiert werden, wobei Produkte ohne Haut besonders gefragt sind. Andererseits wächst das Interesse, die Haut als für die menschliche Ernährung wertvollen Eiweißträger zur Verfügung zu haben, wobei die Möglichkeiten der Nutzung am umfassendsten sind, wenn es gelingt, die Haut von den einzelnen Körperteilen, wie Extremitäten in ihrer natürlichen Struktur zu gewinnen.

Vorrichtungen mit den eingangs erwähnten Baumerkmalen sind weit verbreitet und z. B. zum Enthäuten von Fischen und als Entschwartungsmaschine in praktischem Einsatz. In der bekannten Ausführung sind sie jedoch zum Entfernen der Haut von Geflügel nicht geeignet bzw. ist das Ergebnis, sowohl hinsichtlich der Qualität des enthäuteten Fleischteils, als auch der anfallenden Haut nicht befriedigend.

So zeigt die US 3 324 915 eine Vorrichtung zum Entschwarten, bei der eine angetriebene Hautmitnehmerwalze Verwendung findet, deren griffiger Mantelfläche ein ebenes Messer unter Belassen eines Spaltes gegenüberliegt. Das Messer ist von einem Andrückschuh mit einer Andrückfläche getragen, die sich in Drehrichtung der Hautmitnehmerwalze hinter der Schneidkante des Messers erstreckt und mit deren Mantelfläche einen Spalt bildet. Vor der Hautmitnehmerwalze ist ein Hilfsförderer in Form eines angetriebenen Rotationskörpers angeordnet, der mit der Unterseite des Entschwartgutes in Kontakt tritt und entsprechend einem beschriebenen Ausführungsbeispiel an seinem Umfang einen schraubenförmig gewundenen Steg aufweist. Dieser Hilfsförderer hat die Aufgabe, für eine vollflächige Auflage des Entschwartgutes vor Erreichen des Messerszu sorgen, um Fehlschnitte beispielsweise durch Faltenbildung zu vermeiden.

Es ist die Aufgabe der Erfindung, die Enthäutevorrichtung des eingangs beschriebenen Konzeptes für das Entfernen der Haut von Geflügelkörpern bzw. Teilen solcher Körper geeignet zu machen, so daß die Haut zu wertvollen Nahrungsprodukten verarbeitbar ist bzw. in solchen Produkten verwendet werden kann. Darüber hinaus soll erreicht werden, daß das Fleischteil die Enthäutebearbeitung ohne Schädigung durchläuft.

Diese Aufgabe wird bei einer Enthäutemaschine der eingangs erwähnten Bauart erfindungsgemäß dadurch gelöst, daß der Hilfsförderer oberhalb des Messers angeordnet ist und von diesem weg gegen Feder- oder Schwerkraft verdrängbar ist.

Die damit erzielbaren Vorteile bestehen insbesondere darin, daR der zu enthäutende Geflügelkörper bzw. Geflügelkörperteil nach Erfassen durch den Rotationskörper bezüglich seiner Beschickrichtung eine Querförderung erfährt. Diese bewirkt, daR sich das Enthäutegut dem Messer in stetig sich ändernder Lage darbietet, so daß einerseits die Haut sicher erfaßt und zügig entfernt wird und andererseits die Gefahr einer Beschädigung der Fleischoberfläche reduziert ist.

Vorteilhafte Ausführungsmerkmale der erfindungsgemäßen Vorrichtung sind den Unteransprüchen zu entnehmen.

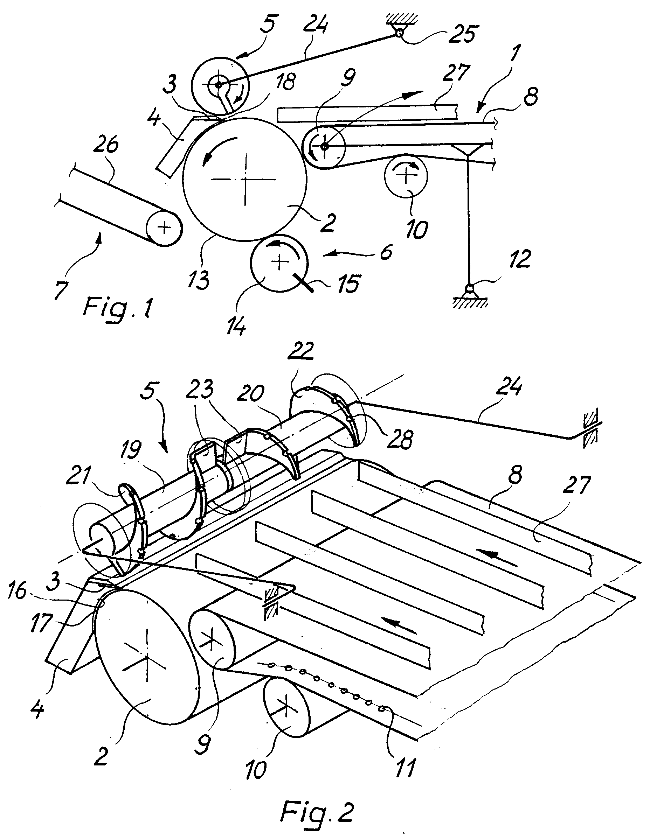

Die Erfindung wird nachstehend anhand eines in der Zeichnung dargestellten Ausführungsbeispiels näher erläutert. Es zeigen
- Fig. 1: eine schematische Seitenansicht der erfindungsgemäß modifizierten Enthäutevorrichtung,
- Fig. 2: eine perspektivische Teilansicht der Vorrichtung nach Fig. 1 in vereinfachter Darstellung.

Die dargestellte Enthäutevorrichtung ist in einem nicht näher gezeigten Gestell untergebracht und umfaßt als wesentliche Teile eine Zuführeinrichtung 1, eine Hautmitnehmerwalze 2, ein Messer 3, einen unterhalb des Messers 3 angeordneten Andrückschuh 4, einen oberhalb des Messers 3 installierten Hilfsförderer 5, einen mit der Hautmitnehmerwalze 2 zusammenwirkenden Hautabstreifer 6 sowie eine Abführeinrichtung 7 für die enthäuteten Geflügelteile.

Die Zuführeinrichtung 1 besteht vorzugsweise aus einem endlosen Fördergurt 8, der um mindestens zwei Umlenkwalzen geführt ist, von denen lediglich die vorrichtungsnahe Umlenkwalze 9 gezeigt ist. Der Antrieb des Fördergurtes 8 erfolgt durch eine gestellfest gelagerte Antriebswalze 10, die in den Untertrum des Fördergurtes 8 formschlüssig, beispielsweise in eine entsprechende Perforation 11 des Fördergurtes 8 eingreift.

Die Zuführeinrichtung 1 ist vorzugsweise in einem eigenen Gestell gelagert, das zum Zwecke der Reinigung um die Achse 12 im Uhrzeigersinn wegschwenkbar ist, wobei der Fördergurt 8 außer Eingriff mit der Antriebswalze 10 gerät.

In unmittelbarer Nachbarschaft zu der Umlenkwalze 9 befindet sich die Hautmitnehmerwalze 2. Sie ist mit einer griffigen Mantelfläche 13 ausgestattet und auf geeignete Weise gegen den Uhrzeigersinn drehend angetrieben. Mit der Mantelfläche 13 steht eine am unteren Teil der Hautmitnehmerwalze 2 angeordnete und mit dieser gleichsinnig umlaufende Bürstenwalze 14 in Kontakt, die ihrerseits mit einem Abstreifkamm 15 zusammenwirkt, der in die Bürstenwalze 14 eingreift.

Im Bereich der der Zuführeinrichtung 1 abgewandten Seite befindet sich der Andrückschuh 4. Dieser ist mit einer der Mantelfläche 13 zuweisenden Andrückfläche 16 versehen, die sich unter Belassen eines Spaltes 17 zu der Mantelfläche 13 erstreckt. Die Weite des Spaltes 17 ist in geeigneter Weise einstellbar. Der Andrückschuh 4 ist gleichzeitig Träger des Messers 3, das klingenförmig ausgebildet ist und in geeigneter Weise mit gegen die Beschickrichtung freiliegender Schneidkante 18 an dem Andrückschuh 4 befestigt ist. Die Schneidkante 18 des Messers 3 verläuft dabei parallel zu der Mantelfläche 13 der Hautmitnehmerwalze 2 und bildet mit dieser einen in geeigneter Weise einstellbaren Spalt.

Der oberhalb des Messers 3 angeordnete Hilfsförderer 5 besteht im Ausführungsbeispiel aus zwei im Uhrzeigersinn angetriebenen und jeweils etwa über die halbe Länge der Hautmitnehmerwalze 2 reichenden Rotationskörpern 19 und 20, die an ihrem Umfang mit einem schraubenförmigen Steg 21 bzw. 22 versehen sind. Die Stege haben dabei einen Windungssinn, der eine Förderkomponente in Richtung auf den Mittenbereich der Hautmitnehmerwalze 2 erzeugt. Die Stege 21 und 22 enden im Bereich ihrer auslaufenden Enden je mit einem Stegteil 23, der sich zu der Achse des jeweiligen Rotationskörpers 19 und 20 radial aufragend und parallel erstreckt. Die Rotationskörper 19 und 20 sind je an einem Lenker 24 geführt, der um ein gestellfestes Lager 25 zwischen nicht gezeigten einstellbaren Anschlägen im Sinne einer Abstandsänderung zu der Mantelfläche 13 der Hautmitnehmerwalze 2 schwenkbar 2 ist.

Schließlich besteht die Abführeinrichtung 7 aus einem endlosen Gurtförderer 26, der unterhalb des Andrückschuhs 4 angeordnet ist.

Die zu enthäutenden Geflügelkörperteile werden mit der überwiegend hautbehafteten Seite auf den Fördergurt 8 aufgelegt, wobei sie zwischen Leitschienen 27 eingebracht werden, die eine Führung jeweils in den Außenbereich der Hautmitnehmerwalze 2 bewirken. Das Enthäutegut gelangt so in Kontakt mit der griffigen Mantelfläche 13 der Hautmitnehmerwalze 2 und wird von dieser in den Bereich der Schneidkante 18 des Messers 3 und gleichzeitig in den Wirkbereich des Hilfsförderers 5 vorgeschoben. Dabei wird das Enthäutegut durch dessen Rotationskörper 19 bzw. 20 erfaßt, wobei dessen Steg 21 bzw. 22 eine Querförderung bewirkt, der eine gewisse Rollbewegung überlagert ist. Auf diese Weise bietet sich schnell ein Hautzipfel, der in dem Spalt 17 zwischen Andrückfläche 16 und Mantelfläche 13 erfaßt wird, so daß der Enthäuteprozeß spontan in Gang kommt und durch die fortlaufende Verlagerung des Enthäutegutes wirksam unterstützt wird.

Das Enthäutegut gelangt schließlich in den auslaufenden Endbereich des betreffenden Rotationskörpers 19 bzw. 20 und wird dort durch das Stegteil 23 erfaßt und ausgeworfen, wodurch das Enthäutegut eventuell rückhaltende Häute, Fasern u. ä. abgerissen und somit der strapazierende Kontakt mit der Hautmitnehmerwalze 2 zügig beendet wird.

Während das enthäutete Produkt über den Messerrücken hinweg auf den Gurtförderer 26 gelangt und abtransportiert wird, durchläuft die Haut den Spalt 17 zwischen Andrückfläche 16 und Mantelfläche 13, an der sie in der Regel haftet. Dadurch gerät die Haut schließlich in den Wirkbereich der Bürstenwalze 14, von der sie abgehoben wird. Um wiederum die Haftung der Haut an der Bürstenwalze 14 zu verhindern, ist der Abstreifkamm 15 vorgesehen.

Die Problematik der Hautabgabe kann auch dadurch gelöst werden, daß die Hautmitnehmerwalze 2 mit Radialnuten versehen wird, in die eine anstelle der Bürstenwalze 14 angeordnete Ausheberwalze mit in die Radialnuten eintauchenden sternförmigen Lamellen eingreift. Dabei sorgt wiederum ein zwischen die Lamellen eintauchender Abstreifkamm dafür, das die Haut von der Aushebewalze enfernt wird.

Bei der Verarbeitung größerer Körperteile, beispielsweise Brustkappen oder Vorderhälften können die Stege 21 bzw. 22 unterbrechende Nuten 28 helfen, daß auch solche Teile zügig bearbeitbar sind.

### Bezugszeichenliste

- 1: Zuführeinrichtung
- 2: Hautmitnehmerwalze
- 3: Messer
- 4: Andrückschuh
- 5: Hilfskörper
- 6: Hautabstreifer
- 7: Abführeinrichtung
- 8: Fördergurt
- 9: Umlenkwalze
- 10: Antriebswalze
- 11: Perforation
- 12: Achse
- 13: Mantelfläche (Hautmitn.)
- 14: Bürstenwalze
- 15: Abstreifkamm
- 16: Andrückfläche
- 17: Spalt
- 18: Schneidkante
- 19: Rotationskörper
- 20: Rotationskörper
- 21: Steg
- 22: Steg
- 23: Stegteil
- 24: Lenker
- 25: Lager
- 26: Gurtförderer
- 27: Leitschienen
- 28: Nut

## Patentansprüche

1. Vorrichtung zum Entfernen der Haut von den Körpern geschlachteten Geflügels bzw. von Teilen solcher Körper, mit einer umlaufend angetriebenen Hautmitnehmerwalze (2) mit griffiger Mantelfläche (13), einem ebenen Messer (3), welches mit seiner Schneidkante (18) der Mantelfläche (13) unter Belassen eines Spaltes gegenüberliegt, einem in Drehrichtung der Hautmitnehmerwalze (2) hinter der Schneidkante (18) angeordneten Andrückschuh (4) mit einer einen Spalt (17) gegenüber der Mantelfläche (13) bildenden Andrückfläche (16), sowie mit einem Hilfsförderer (5), welcher mindestens einen umlaufend angetriebenen Rotationskörper (19, 20) umfaßt, dessen Drehachse im wesentlichen parallel zu der Achse der Hautmitnehmerwalze (2) verläuft und der an seinem Umfang einen schraubenförmig gewundenen Steg (21, 22) aufweist,
**dadurch gekennzeichnet,** daß der Hilfsförderer (5) oberhalb des Messers (3) angeordnet ist und von diesem weg gegen Feder- oder Schwerkraft verdrängbar ist.

2. Vorrichtung nach Anspruch 1, **dadurch gekennzeichnet,** daß der Hüllkörper des Rotationskörpers (19, 20) ein Zylinder ist.

3. Vorrichtung nach Anspruch 1 oder 2, **dadurch gekennzeichnet,** daß der Hüllkörper des Rotationskörpers (19, 20) ein Kegelstumpf ist.

4. Vorrichtung nach einem der Ansprüche 1 bis 3, **dadurch gekennzeichnet.** daß die Steigung und/oder die Höhe des schraubenförmigen Steges (21, 22) des Rotationskörpers (19, 20) kleiner ist als die größte Breitendimension und/oder Höhendimension des zu bearbeitenden Körpers oder Körperteils.

5. Vorrichtung nach einem der Ansprüche 1 bis 4, **dadurch gekennzeichnet,** daß der Hilfsförderer (5) zwei Rotationskörper (19, 20) umfaßt, wobei jeder für sich verdrängbar angeordnet ist, und wobei jeder Rotationskörper (19, 20) einen schraubenförmig gewundenen Steg (21, 22) mit einem Windungssinn aufweist, der jeweils gegen den anderen Rotationskörper (19, 20) gerichtet ist.

6. Vorrichtung nach einem der Ansprüche 1 bis 5, **dadurch gekennzeichnet,** daß die Kammfläche der Stege (21, 22) durch Nuten (28) unterbrochen ist.

7. Vorrichtung nach einem der Ansprüche 1 bis 6, **dadurch gekennzeichnet,** daß der schraubenförmige Steg (21, 22) jedes Rotationskörpers (19, 20) im Bereich seines auslaufenden Endes mit einem Stegteil (23) endet, der sich zu der Achse des Rotationskörpers (19, 20) im wesentlichen radial aufragend und parallel erstreckt.

8. Vorrichtung nach Anspruch 7, **dadurch gekennzeichnet,** daß die Zuführeinrichtung (1) mindestens einen angetriebenen Gurtförderer (26) umfaßt, der in unmittelbarer Nähe der Mantelfläche (13) der Hautmitnehmerwalze (2) umgelenkt ist und dessen Förderfläche Leitschienen (27) zugeordnet sind, die paarweise bezüglich ihres Abstandes zueinander einstellbar sind und jeweils einen Leitkanal bilden, der jeweils in den äußeren Bereich jedes Rotationskörpers (19, 20) führend ausgerichtet ist.

9. Vorrichtung nach Anspruch 8, **dadurch gekennzeichnet,** daß die Leitschienen (27) zusätzlich in Längsrichtung einstellbar ausgeführt sind.

## Claims

1. Device for the removal of skin from the carcasses of slaughtered poultry or from parts of such carcasses, with a rotationally driven skin entraining roller (2) with gripper circumferential surface (13), a planar knife (3) which lies opposite the circumferential surface (13) by its cutting edge (18) while leaving a gap, a presser shoe (4), which is arranged behind the cutting edge (18) in rotational direction of the skin entraining roller (2), with a presser surface (16) forming a gap (17) relative to the circumferential surface (13), and with an auxiliary conveyor (15) which comprises at least one rotationally driven body of rotation (19, 20), the axis of rotation of which extends substantially parallel to the axis of the skin entraining roller (2) and which has a web (21, 22) wound in screw-shape at its circumference, characterised thereby that the auxiliary conveyor (5) is arranged above the knife (3) and is displaceable away from this against spring or gravitational force.

2. Device according to claim 1, characterised thereby that the shell body of the body of rotation (19, 20) is a cylinder.

3. Device according to claim 1 or 2, characterised thereby that the shell body of the body of rotation (19, 20) is a conical frustrum.

4. Device according to one of claims 1 to 3, characaterised thereby that the inclination and/or height of the screw-shaped web (21, 22) of the body of rotation (19, 20) is smaller than the largest width dimension and/or height dimension of the carcass or carcass part to be processed.

5. Device according to one of claims 1 to 5, characterised thereby that the auxiliary conveyor (5) comprises two bodies of rotation (19, 20), wherein each is arranged to be displaceable on its own and wherein each body of rotation (19, 20) has a web (21, 22), which is wound in screw-shape, with a direction of winding oriented oppositely to the respective other body of rotation (19, 20).

6. Device according to one of claims 1 to 5, characterised thereby that the crest surface of the webs (21, 22) is interrupted by grooves (28).

7. Device according to one of claims 1 to 6, characterised thereby that the screw-shaped web (21, 22) of each body of rotation (19, 20) ends in the region of its outflow end by a web part (23) which extends parallel and projects substantially radially relative to the axis of the body of rotation (19, 20).

8. Device according to claim 7, characterised thereby that the feed equipment (1) comprises at least one driven belt conveyor (26) which is deflected in the immediate proximity of the circumferential surface (13) of the skin entraining roller (2) and the conveying surface of which is associated with guide rails (27) which are adjustable in pairs with respect to their spacing from one another and each form a guide channel which is oriented each time to guide in the outer region of each body of rotation (19, 20).

9. Device according to claim 8, characterised thereby that the guide rails (27) are designed to additionally be adjustable in longitudinal direction.

## Revendications

1. Dispositif pour enlever la peau des corps de volailles abattues, ou de parties de tels corps, comportant un rouleau d'entraînement de peau (2) entraîné en rotation ayant une surface d'enveloppe (13) à pouvoir d'adhérence, une lame plane (3), qui est placée par son arête de coupe (18) en face de la surface d'enveloppe (13) en laissant subsister un interstice, un patin de pressage (4) disposé derrière l'arête de coupe (18), dans le sens de rotation du rouleau d'entraînement de peau (2), et comportant une surface de pressage (16) définissant un interstice (17) par rapport à la surface d'enveloppe (13), ainsi qu'un transporteur auxiliaire (5), comprenant au moins un corps de révolution (19, 20) entraîné en rotation, dont l'axe de rotation est sensiblement parallèle à l'axe du rouleau d'entraînement de peau (2) et qui présente une nervure (21, 22) enroulée en hélice sur sa périphérie, caractérisé en ce que le transporteur auxiliaire (5) est disposé au-dessus de la lame (3) et peut être déplacé à l'écart de celle-ci, à l'encontre de la force exercée par un ressort ou de la pesanteur.

2. Dispositif selon la revendication 1, caractérisé en ce que le corps d'enveloppe du corps de révolution (19, 20) est un cylindre.

3. Dispositif selon la revendication 1 ou 2, caractérisé en ce que le corps d'enveloppe du corps de révolution (19, 20) est un tronc de cône.

4. Dispositif selon l'une des revendications 1 à 3, caractérisé en ce que le pas et/ou la hauteur de la nervure hélicoïdale (21, 22) du corps de révolution (19, 20) est inférieur à la dimension en largeur maximale et/ou la dimension en hauteur maximale du corps ou de la partie de corps à travailler.

5. Dispositif selon l'une des revendications 1 à 4, caractérisé en ce que le transporteur auxiliaire (5) comprend deux corps de révolution (19, 20), chacun étant monté déplaçable en lui-même, et chaque corps de révolution (19, 20) présentant une nervure (21, 22) enroulée hélicoïdalement, avec un sens d'enroulement dirigé respectivement vers l'autre corps de révolution (19, 20).

6. Dispositif selon l'une des revendications 1 à 5, caractérisé en ce que la surface de crête des nervures (21, 22) est interrompue par des rainures (28).

7. Dispositif selon l'une des revendications 1 à 6, caractérisé en ce que la nervure hélicoïdale (21, 22) de chaque corps de révolution (19, 20) s'achève dans la zone de son extrémité de fuite par une partie de nervure (23) qui s'étend dressée, sensiblement radialement et parallèlement à l'axe du corps de révolution (19, 20).

8. Dispositif selon la revendication 7, caractérisé en ce que le dispositif d'amenée (1) comprend au moins un transporteur à courroie (26) entraîné, qui change de direction à proximité immédiate de la surface d'enveloppe (13) du rouleau d'entraînement de peau (2) et à la surface de transport duquel sont associées des glissières de guidage (27), réglables par paires l'une par rapport à l'autre concernant leur espacement mutuel et constituant chaque fois un canal de guidage, qui est orienté de manière à aboutir dans la région extérieure de chaque corps de révolution (19, 20).

9. Dispositif selon la revendication 8, caractérisé en ce que les glissières de guidage (27) sont en plus réglables en direction longitudinale.
